# NEW EUROPEAN PATENT SPECIFICATION

(11) **EP 0 997 620 B2**
(45) Date of publication and mention of the opposition decision: **07.12.2005**
(45) Mention of the grant of the patent: 18.09.2002
(21) Application number: 99100729.5
(22) Date of filing: 15.01.1999
(51) Int. Cl.: F02B 17/00, F02F 1/22, F02B 25/14

(54) **Cylinder for stratified scavenging two-cycle engine**
Zylinder für eine Zweitaktmaschine mit schichtgeladener Spülung
Cylindre pour un moteur à deux temps avec charge et balayage stratifié

(30) Priority: 30.10.1998 JP 32446798
(43) Date of publication of application: 03.05.2000
(73) Proprietor: KOMATSU ZENOAH CO., Saitama 350-1192 (JP)
(72) Inventor: Sawada, Toshiharu c/o Komatsu Zenoah Co., Higashiyamato-shi, Tokyo 207-8788 (JP); Kato, Hiroshi c/o Komatsu Zenoah Co., Higashiyamato-shi, Tokyo 207-8788 (JP); Watanabe, Takeshi c/o Komatsu Zenoah Co., Higashiyamato-shi, Tokyo 207-8788 (JP)
(74) Representative: Viering, Jentschura & Partner

(56) References cited:
- WO-A-98/17903
- DE-C- 653 500
- GB-A- 1 285 471
- JP-A- 10 121 975
- US-A- 4 306 522
- US-A- 5 396 867
- PATENT ABSTRACTS OF JAPAN vol. 009, no. 003 (M-349), 9 January 1985 (1985-01-09) & JP 59 153950 A (NIHON KURINENJIN KENKYUSHO:KK), 1 September 1984 (1984-09-01)

## Description

### Technical Field

The present invention relates to a cylinder for a stratified scavenging two-cycle engine, and more particularly to a scavenging flow passage of the cylinder.

### Background Art

Conventionally, in a scavenging flow passage for a stratified scavenging two-cycle engine, a method is frequently adopted in order to certainly conduct stratified scavenge, in which a crank chamber and the inside of a cylinder are connected with a hooked scavenging flow passage composed of a vertical scavenging flow passage provided outside a cylinder wall and a horizontal scavenging flow passage for connection between the vertical scavenging flow passage and the cylinder. The scavenging flow passage is often manufactured by gravity casting. This method, however, has a disadvantage that the cost is high, and therefore manufacture by die-cast is desired. Examples of solutions to the above disadvantage are proposals made in Japanese Patent Publication No. 6-96185 and Japanese Utility Model Publication No. 1-18813.

According to an art disclosed in Japanese Patent Publication No.6-96185, a cylinder liner is set within a cylinder portion forming space which is formed in the inside with a plurality of die casting dies. A scavenging passage horizontal portion penetrating to the outside of the cylinder and a scavenging passage vertical portion are formed with the die casting dies, and molten metal is poured into them. After the molten metal is solidified, the die casting dies are removed, and a blank cap is inserted into a portion of the scavenging passage horizontal portion penetrating in the outside to form a scavenging passage.

According to the aforesaid configuration, the cylinder liner is used for the cylinder portion formed by the plurality of die casting dies. In addition, in order to form a scavenging passage into the cylinder, a die casting die protruding portion is formed in such a manner to form the scavenging passage horizontal portion penetrating to the outside of the cylinder with the die casting die. After casting, the die casting die protruding portion is pulled out, and the blank cap is inserted into the formed scavenging passage horizontal portion to form the scavenging passage. Thus, the number of used parts such as the cylinder liner, die casting die protruding portion, blank cap, and the like increases. Moreover, since the die casting die protruding portion is formed, the die becomes more complicate and large-sized and cylinder manufacturing processes and working hours are increased. As a result, there arises a disadvantage that the cost of manufacturing the cylinder is high.

According to an art disclosed in Japanese Utility Model Publication No. 1-18813, an adapter including a scavenging passage forming wall surface and a suction passage is separately formed, and the adapter is attached to an adapter attaching face formed in the cylinder to form the scavenging passage.

In the aforesaid configuration, however, the adapter which is separately formed is attached to the adapter attaching face formed on the outer peripheral face of the cylinder to form the scavenging passage, thereby increasing the number of the parts, complicating and increasing the manufacturing processes. Consequently, there arise disadvantages that it takes more time to manufacture the cylinder and the manufacturing cost becomes higher.

### Summary of the Invention

In view of the aforesaid disadvantages, an object of the present invention is to provide a cast cylinder for a stratified scavenging two-cycle engine, which has excellent scavenging performance and a structurally simple scavenging flow passage, and is manufactured at low cost.

A cast cylinder for a stratified scavenging two-cycle engine according to the present invention is characterized in that in a cylinder for a stratified scavenging two-cycle engine including a piston, a cylinder housing the piston to be vertically slidable, a crankcase connected to the cylinder, an exhaust port and a scavenging port each provided in a side wall of the cylinder, a vertical scavenging flow passage provided within the cast side wall of the cylinder, whose lower end portion is connected to a crank chamber provided within the crankcase wall, a horizontal scavenging flow passage for connection between the upper end portion of the vertical scavenging flow passage and the scavenging port, an air supply flow passage supplying air through a check valve to a scavenging flow passage having the vertical scavenging flow passage and the horizontal scavenging flow passage, and a mixture supply flow passage supplying mixture from a fuel supply means to the crank chamber, an opening portion is provided in the side wall of the cylinder which is the extension of the horizontal scavenging flow passage toward the outside of the cylinder.

According to the aforesaid configuration, the opening portion is provided in the side wall of the cylinder which is the extension of the horizontal scavenging flow passage toward the outside of the cylinder, which enables the formation of the horizontal scavenging flow passage by cutting from the outside of the cylinder through the opening portion after manufacturing the cylinder without forming the horizontal scavenging flow passage by casting. Accordingly, in casting the cylinder, a die for forming the horizontal scavenging flow passage becomes unnecessary, thus making it possible to manufacture the cylinder with a small-sized and structurally simple die casting die. Consequently, the number of parts of the die and the manufacturing processes decrease, whereby the cylinder can be manufactured at low cost.

Moreover, the scavenging port and the horizontal scavenging flow passage may be formed through a cutting through-hole which penetrates the opening portion and the inner face of the cylinder.

According to the aforesaid configuration, since the scavenging port and the horizontal scavenging flow passage are formed by cutting work, the positions, directions, diameter dimensions, and the like of the scavenging port and the horizontal scavenging flow passage can be precisely wrought. In addition, the aforesaid configuration can easily cope with the design change of the horizontal scavenging flow passage without changing the design of the casting die by setting the position, direction, diameter dimension, and the like in cutting work at predetermined values, whereby the cylinder with good scavenging performance can be manufactured at low cost.

Further, it is possible that the cutting through-hole is bored with an inclination of a predetermined angle to a line passing the central axis of the cylinder in plane view, and the opening portion is provided with a face which is vertical to the axis of the cutting through-hole and provided with a run off for preventing interference with tools in cutting work at a mounting seat for an air supply flow passage member disposed at the outer rim thereof.

According to the aforesaid configuration, it is possible to form the scavenging port and the horizontal scavenging flow passage toward the inner face of the cylinder opposite the exhaust port by boring the cutting through-hole in such a mannerthat the axial direction of the cutting through-hole inclines at a predetermined angle to a line passing the central axis of the cylinder in plane view. Accordingly, the directions of the scavenging port and the horizontal scavenging flow passage can be properly set so as to improve scavenging performance. Thus, air is sent into the inner part of the cylinder opposite the exhaust port at the time of scavenge to thereby push out exhaust gas into the exhaust port, which leads to the improvement of scavenging performance. Besides, since the opening portion is provided with the face which is vertical to the axis of the cutting through-hole, tools such as a drill, an end mill, and the like never slide in working, whereby cutting work can be surely and easily conducted. Incidentally, the face vertical to the axis of the cutting through-hole may be a face which remains cast or a wrought face. In addition, since the run off for preventing interference with tools in cutting work is provided at the mounting seat for the air supply flow passage member, the cutting work is easily conducted without interference, thus improving product quality, decreasing working man-hour, and enabling the manufacture of low-cost cylinders.

Furthermore, it is possible that an air supply flow passage member having a protruding portion is attached to cover the opening portion, the protruding portion protrudes into the opening portion, and a guide face with an inclination of a predetermined angle is provided at the front end portion of the protruding portion, and the horizontal scavenging flow passage is formed with an inclination of a predetermined angle to a line passing the central axis of the cylinder in plane view.

According to the aforesaid configuration, the protruding portion having the guide face with an inclination of a predetermined angle at the front end portion thereof is provided at the air supply flow passage member, the air supply flow passage member being attached to the opening portion, which makes it possible that the horizontal scavenging flow passage is formed to slant toward the inner face of the cylinder opposite the exhaust port. Therefore, air is sent into the inner part of the cylinder along the guide face, thus improving scavenging performance. The light and small air supply flow passage member is wrought without directly working a heavy cylinder, thereby facilitating handling in working and reducing the working cost.

### Brief Description of the Drawings

Fig. 1 is a front sectional view of a stratified scavenging two-cycle engine including a cylinder of the present invention;
Fig. 2 is a sectional view taken along the 2-2 line in Fig. 1;
Fig. 3 is a front sectional view of a cylinder of a first embodiment of the present invention;
Fig. 4 is a sectional view taken along the 4-4 line in Fig. 3;
Fig. 5 is a front view of the cylinder seen from the arrow 5 in Fig. 4;
Fig. 6 is a sectional view taken along the 6-6 line in Fig. 3;
Fig. 7 is a front view of a cylinder of a second embodiment of the present invention;
Fig. 8 is a sectional view taken along the 8-8 line in Fig. 7; and
Fig. 9 is a perspective view of an air supply flow passage member of the second embodiment of the present invention.

### Best Mode for Carrying out the Invention

Preferable embodiments of the present invention will be described in detail below with reference to the attached drawings.

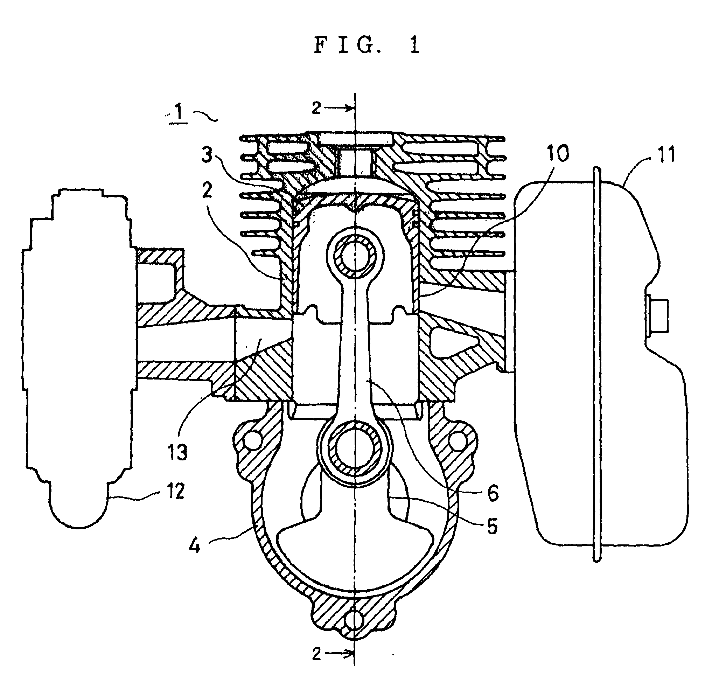

In Fig. 1, a piston 3 is housed vertically and slidably in a cylinder 2 for a stratified scavenging two-cycle engine 1, and a crankcase 4 is attached to the lower end face of the cylinder 2. A crankshaft 5 is rotatably attached in the crankcase 4, and the piston 3 and the crankshaft 5 are connected with a connecting rod 6. An exhaust port 10 is formed on one side of the wall surface of the cylinder 2 and connected to a muffler 11. Formed on the other side of the wall surface of the cylinder 2 is a mixture supply flow passage 13 connected to a carburetor (a fuel supply means) 12.

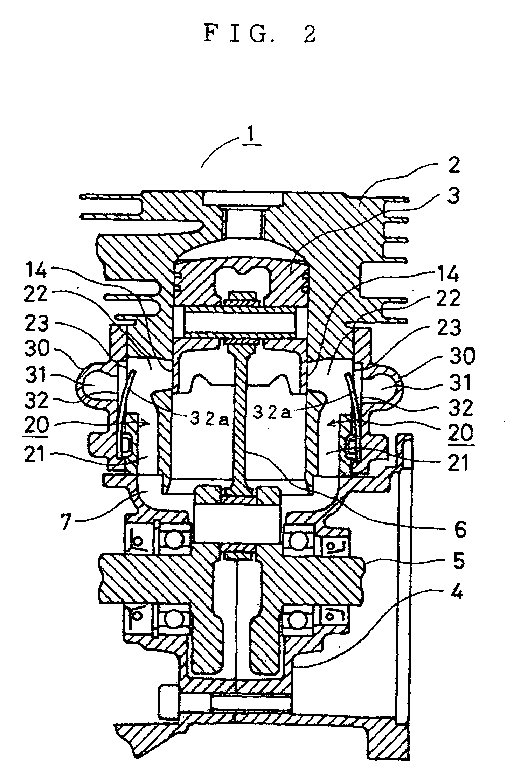

In Fig. 2, a pair of scavenging ports 14 and 14 which are opposite each other are provided in the wall surface of the cylinder 2, and each scavenging port 14 communicates with a crank chamber 7 through a scavenging flow passage 20 formed within the wall of the cylinder2. The upper portion of the scavenging flow passage 20 leads to the outside through an opening portion 23. An air supply flow passage 31 is provided in an air supply flow passage member 30 attached to the opening portion 23, the air supply flow passage 31 being connected to the scavenging flow passage 20 through a check valve 32 which is disposed between the air supply flow passage 31 and the opening portion 23. Each check valve 32 includes a check valve stopper 32a as a stopper plate.

In a scavenging stroke, when the piston 3 descends, first the exhaust port 10 opens, subsequently the scavenging port 14 opens, and air which flows in from the air supply flow passage 31 is compressed to thereby flow into the cylinder 2 so that exhaust gas is exhausted through the exhaust port 10. Next, mixture flows into the cylinder 2 from the scavenging flow passage 20 to thereby conduct stratified scavenge.

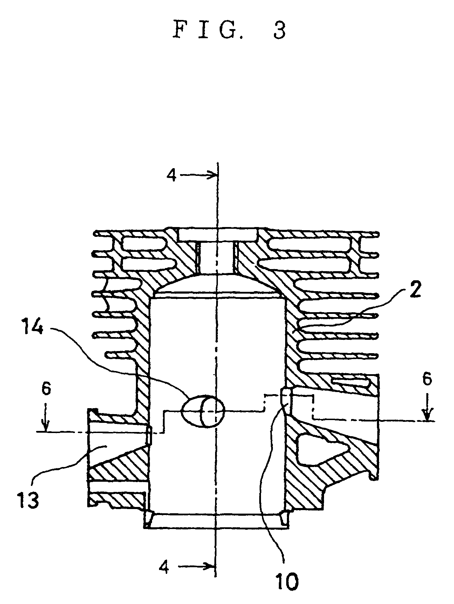

The configuration of the cylinder 2 will be described in detail below. Fig. 3 shows the cylinder 2 of a first embodiment. The exhaust port 10, a mixture supply flow passage 13, and the scavenging port 14 are formed in the wall surface of the cylinder 2.

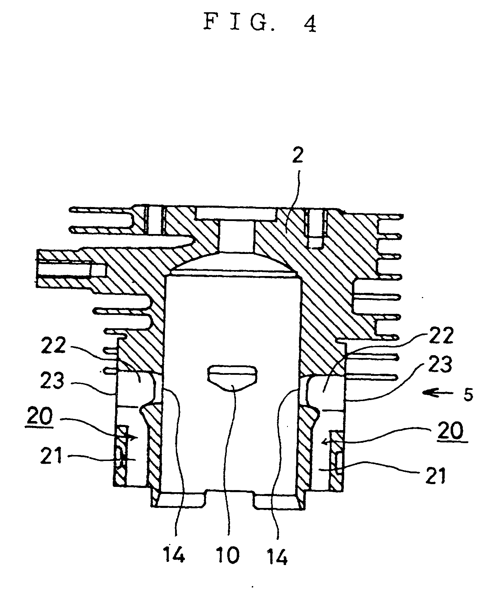

In Fig. 4, a pair of the scavenging flow passages 20 and 20, which are opposite each other, are each formed vertically within the wall of the cylinder 2. The scavenging flow passage 20 is composed of a vertical scavenging flow passage 21 which penetrates the lower end portion of the cylinder 2 and a horizontal scavenging flow passage 22 for connection between the upper end portion of the vertical scavenging flow passage 21 and the scavenging port 14. In the scavenging flow passage 20, the opening portion 23 is formed in the side wall of the cylinder 2 which is the extension of the horizontal scavenging flow passage 22 toward the outside of the cylinder 2.

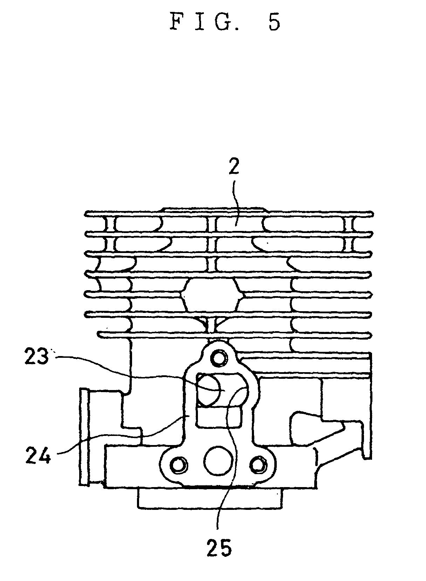

In Fig. 5, a mounting seat 24 for mounting the air supply flow passage member 30 (See Fig. 2) is formed at the outer rim of the opening portion 23, and a run off 25 is provided on one side of a portion surrounding the opening portion 23 of the mounting seat 24.

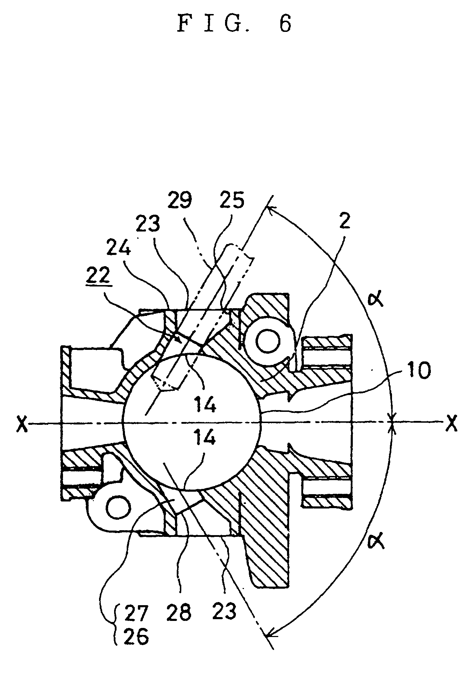

Fig. 6 shows the configuration of the horizontal scavenging flow passage 22 of the first embodiment. A pair of the opening portions 23 and 23 are provided in both outer faces of the cylinder 2. The opening portion 23 and the scavenging port 14 are bored and connected by means of a drilling through-hole 27 which is a cutting through-hole 26 to form the horizontal scavenging flow passage 22. The drilling through-hole 27 inclines at a predetermined angle α to the X-X line connecting the central axis of the cylinder 2 and the center of the exhaust port 10 in plane view. The drilling through-hole 27 is directed to the inner face of the cylinder 2 opposite the exhaust port 10. A face 28 which is vertical to the axial direction of the drilling through-hole 27 is provided in the opening portion 23. In addition, the run off 25 is provided at the mounting seat 24 provided at the opening portion 23 so as to prevent interference with tools when the drilling through-hole 27 is wrought by a drill 29.

As described above, in the cylinder 2 according to the present invention, the opening portion 23 is formed in the side wall of the cylinder 2 which is the extension of the horizontal scavenging flow passage 22 toward the outside of the cylinder 2, which enables the formation of the horizontal scavenging flow passage 22 and the scavenging port 14 by cutting work from the outside of the cylinder 2 with the use of the opening portion 23. Therefore, a projecting portion of a die casting die for forming a scavenging flow passage and a scavenging port which has been conventionally required becomes unnecessary, thus simplifying a die casting die for forming the scavenging flow passage and the vicinity of the scavenging port and reducing the number of die casting dies. Accordingly, the die-casting die can be structurally simplified, decreased in size compared with the conventional one, and easily manufactured, whereby the manufacturing processes of the cylinder 2 are decreased. As a result, the less expensive cylinder 2 can be manufactured.

Moreover, the positions, directions, diameter dimensions, and the like of the horizontal scavenging flow passage 22 and the scavenging port 14 can be precisely wrought by simple cutting work such as drilling work or the like, thereby forming the scavenging flow passage 20 with great precision and good scavenging performance. Accordingly, the high quality cylinder 2 can be manufactured at low cost.

The horizontal scavenging flow passage 22 and the scavenging port 14 are formed in such a manner that the axis thereof is directed to the inner face of the cylinder 2 opposite the exhaust port 10. Thus, air at the time of scavenge is sent into the inner part on the opposite side of the exhaust port 10 of the cylinder 2 and exhaust gas at the inner part of the cylinder 2 is exhausted through the exhaust port 10, which enables efficient scavenge. In addition, when the horizontal scavenging flow passage 22 and the scavenging port 14 are drilled, the drill 29 never slides, whereby drilling work can be easily conducted with excellent positioning accuracy. Moreover, when working is conducted with the drill 29 being tilted, the opening portion 23 never interferes with the drill 29 and thus the cylinder 2 of good quality can be manufactured.

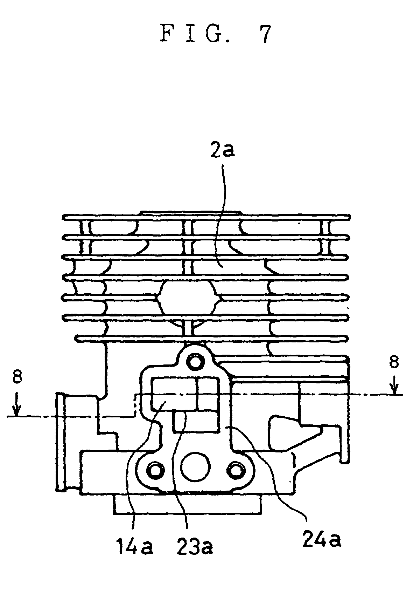

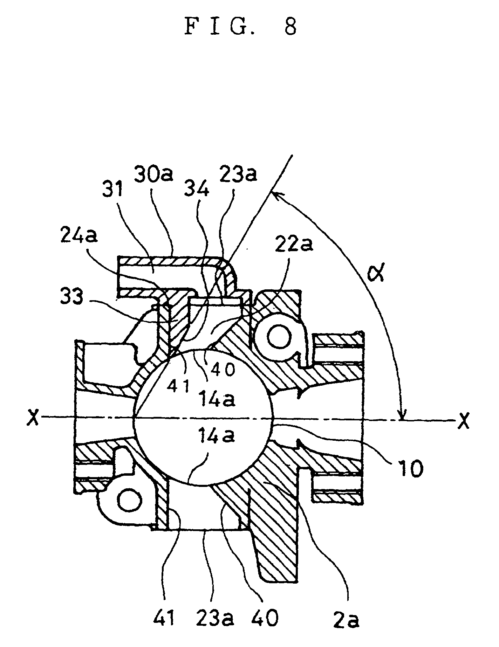

Next, a cylinder of a second embodiment of the present invention will be described. Fig. 7 is a front view of a cylinder 2a. The upper portion of Fig. 8 shows a state that an air supply flow passage member 30a is attached to the cylinder 2a. In Figs. 7 and 8, rectangular opening portions 23a and 23a in side view are provided on both side faces of the cylinder 2a. The opening portion 23a penetrates to a scavenging port 14a which is provided in the inner wall surface of the cylinder 2a. As shown in the lower portion of Fig. 8, an inclined face 40 is provided on the exhaust port 10 side of the inner face of the opening portion 23a in such a manner to go away from the exhaust port 10 from the outside toward the inside of the cylinder 2a. Provided on the opposite side of the exhaust port 10 of the inner face of the opening portion 23a is a face 41 which is vertical to the line X-X connecting the central axis of the cylinder 2a and the center of the exhaust port 10 in plane view.

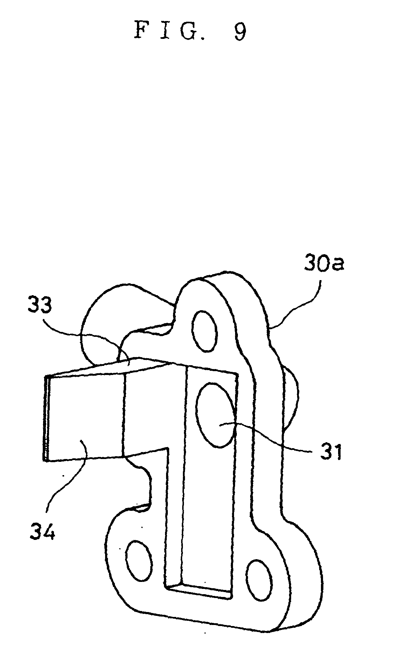

As shown in the upper portion of Fig. 8, on a mounting seat 24a provided at the outer rim of the opening portion 23a, an air supply flow passage member 30a having the air supply flow passage 31 is mounted to cover the opening portion 23a. At the front end portion of the air supply flow passage member 30a, a protruding portion 33 which protrudes on the face 41 side of the opening portion 23a and along the face 41 is provided. As shown in Figs. 8 and 9, an inclined guide face 34 is provided on the inside of the protruding portion 33 of the air supply flow passage member 30a. As shown in Fig. 8, the guide face 34 is at an angle α to the line X-X. Formed by the inclined face 40 and the guide face 34 is a horizontal scavenging flow passage 22a which is directed to the inner face of the cylinder 2a opposite the exhaust port 10.

The functional operation of the second embodiment is the same as that of the first embodiment and the explanation thereof is omitted. According to the present configuration, when the horizontal scavenging flow passage 22a with an inclination of a predetermined angle α to the central axis of the cylinder 2a is formed by cutting work, the light and small air supply flow passage member 30a is separately worked. Therefore, handling and working is easier compared with the configuration in which the heavy and large-sized cylinder 2a itself is directly wrought. Consequently, working man-hour can be decreased. Although the opening portion 23a is rectangular in side view and the air guide face 34 of the air supply flow passage member 30a has a flat surface in this embodiment, the opening portion 23a and the air guide face 34 may have other shapes, for example, the opening portion 23a may be rounded at both ends and the air guide face 34 may have an arc-shaped surface.

The first and second embodiments are described on the assumption of die casting, but different casting such as gravity casting, high pressure casting, or the like is also possible.

## Claims

1. A cast cylinder for a stratified scavenging two-cycle engine including:
a piston (3),
a cylinder (2, 2a) housing said piston (3) to be vertically slidable,
a crankcase (4) connected to said cylinder (2, 2a),
an exhaust port (10) and a scavenging port (14) each provided in a side wall of said cylinder (2, 2a),
a vertical scavenging flow passage (21) provided within the cast sidewall of said cylinder (2, 2a), a lower end portion of said vertical scavenging flow passage (21) being connected to a crank chamber (7),
a horizontal scavenging flow passage (22, 22a) for connection between the upper end portion of said vertical scavenging flow passage (21) and said scavenging port (14),
an air supply flow passage (31) supplying air through a check valve (32) to a scavenging flow passage (20) having said vertical scavenging flow passage (21) and said horizontal scavenging flow passage (22, 22a), and
a mixture supply flow passage (13) supplying mixture from a fuel supply means (12) to said crank chamber (7), wherein
an opening portion (23, 23a) is provided in the side wall of said cylinder (2, 2a) which is the extension of said horizontal scavenging flow passage (22, 22a) toward the outside of said cylinder (2, 2a), and
said scavenging port (14) and said horizontal scavenging flow passage (22) are formed through a cutting through-hole (26) which penetrates said opening portion (23) and the inner face of said cylinder (2) by utilizing said opening portion (23).

2. The cast cylinder according to claim 1, wherein
said cutting through-hole (26) is bored with an inclination of a predetermined angle (α) to a line passing the central axis of said cylinder (2) in plane view, and wherein
said opening portion (23) is provided with a face (28) which is vertical to the axis of said cutting through-hole (26) and provided with a run off (25) for preventing interference with tools in cutting work at a mounting seat (24) for an air supply flow passage member (30) disposed at the outer rim thereof.

3. A cast cylinder for a stratified scavenging two-cycle engine including:
a piston (3),
a cylinder (2a) housing said piston (3) to be vertically slidable,
a crankcase (4) connected to said cylinder (2a),
an exhaust port (10) and a scavenging port (14) each provided in a side wall of said cylinder (2a),
a vertical scavenging flow passage (21) provided within the cast sidewall of said cylinder (2a), a lower end portion of said vertical scavenging flow passage (21) being connected to a crank chamber (7),
a horizontal scavenging flow passage (22a) for connection between the upper end portion of said vertical scavenging flow passage (21) and said scavenging port (14),
an air supply flow passage (31) supplying air through a check valve (32) to a scavenging flow passage (20) having said vertical scavenging flow passage (21) and said horizontal scavenging flow passage (22a), and
a mixture supply flow passage (13) supplying mixture from a fuel supply means (12) to said crank chamber (7), wherein
an opening portion (23a) is provided in the side wall of said cylinder (2a) which is the extension of said horizontal scavenging flow passage (22a) toward the outside of said cylinder (2a),
an air supply flow passage member (30a) is attached to cover said opening portion (23a), said air supply flow passage member (30a) including a protruding portion (33) that protrudes into said opening portion (23a) and has a guide face (34) with an inclination of a predetermined angle (α) provided at the front end portion of the protruding portion (33) and said air supply flow passage (31),
said guide face (34) in the horizontal scavenging flow passage (22a) is formed with an inclination of a predetermined angle (α) to a line passing the central axis of said cylinder (2a) plane view so as to be directed toward an inner surface of the cylinder (2a) in an opposite side of the exhaust port (10), and
said horizontal scavenging flow passage (22a) is directed toward the inner surface of the cylinder (2a) in an opposite side of the exhaust port (10).

## Patentansprüche

1. Gusszylinder für einen Zweitaktmotor mit Schichtspülung, aufweisend:
einen Kolben (3),
einen Zylinder (2, 2a), der den Kolben (3) so aufnimmt, dass er vertikal verschiebbar ist,
ein Kurbelgehäuse (4), das mit dem Zylinder (2, 2a) verbunden ist,
eine Auslassöffnung (10) und eine Spülöffnung (14), die jeweils in einer Seitenwand des Zylinders (2, 2a) vorgesehen sind,
eine vertikale Spülstrompassage (21), die in der Gussseitenwand des Zylinders (2, 2a) vorgesehen ist, wobei ein unterer Endabschnitt der vertikalen Spülstrompassage (21) mit einer Kurbelkammer (7) verbunden ist,
eine horizontale Spülstrompassage (22, 22a) für eine Verbindung zwischen dem oberen Endabschnitt der vertikalen Spülstrompassage (21) und der Spülöffnung (14),
eine Luftzustrompassage (31), die durch ein Rückschlagventil (32) hindurch einer die vertikale Spülstrompassage (21) und die horizontale Spülstrompassage (22, 22a) aufweisenden Spülstrompassage (20) Luft zuführt, und
eine Gemischzustrompassage (13), die Gemisch aus einem Kraftstoffzuführmittel (12) der Kurbelkammer (7) zuführt,
wobei in der Seitenwand des Zylinders (2, 2a) ein Öffnungsabschnitt (23, 23a) vorgesehen ist, welcher die Verlängerung der horizontalen Spülstrompassage (22, 22a) in Richtung zur Außenseite des Zylinders (2, 2a) hin ist, und
wobei die Spülöffnung (14) und die horizontale Spülstrompassage (22) durch ein Schneidbearbeitungs-Durchgangsloch (26) hindurch geformt sind, welches unter Nutzung des Öffnungsabschnitts (23) den Öffnungsabschnitt (23) und die Innenfläche des Zylinders (2) durchdringt.

2. Gusszylinder gemäß Anspruch 1,
wobei das Schneidbearbeitungs-Durchgangsloch (26) mit einer Neigung in einem vorbestimmten Winkel (α) zu einer Linie gebohrt ist, die in Draufsicht durch die Mittelachse des Zylinders (2) verläuft, und
wobei der Öffnungsabschnitt (23) mit einer Fläche (28) versehen ist, welche vertikal zu der Achse des Schneidbearbeitungs-Durchgangsloches (26) ist und welche mit einer Ausbuchtung (25) versehen ist zum Verhindern einer Überschneidung mit Werkzeugen bei der Schneidbearbeitung an einem Montagesitz (24) für ein Luftzustrompassagenteil (30), das an dessen Außenrand angeordnet ist.

3. Gusszylinder für einen Zweitaktmotor mit Schichtspülung, aufweisend:
einen Kolben (3),
einen Zylinder (2a), der den Kolben (3) so aufnimmt, dass er vertikal verschiebbar ist,
ein Kurbelgehäuse (4), das mit dem Zylinder (2a) verbunden ist,
eine Auslassöffnung (10) und eine Spülöffnung (14), die jeweils in einer Seitenwand des Zylinders (2a) vorgesehen sind,
eine vertikale Spülstrompassage (21), die in der Gussseitenwand des Zylinders (2a) vorgesehen ist, wobei ein unterer Endabschnitt der vertikalen Spülstrompassage (21) mit einer Kurbelkammer (7) verbunden ist,
eine horizontale Spülstrompassage (22a) für eine Verbindung zwischen dem oberen Endabschnitt der vertikalen Spülstrompassage (21) und der Spülöffnung (14),
eine Luftzustrompassage (31), die durch ein Rückschlagventil (32) hindurch einer die vertikale Spülstrompassage (21) und die horizontale Spülstrompassage (22a) aufweisenden Spülstrompassage (20) Luft zuführt, und
eine Gemischzustrompassage (13), die Gemisch aus einem Kraftstoffzuführmittel (12) der Kurbelkammer (7) zuführt,
wobei in der Seitenwand des Zylinders (2a) ein Öffnungsabschnitt (23a) vorgesehen ist, welcher die Verlängerung der horizontalen Spülstrompassage (22a) in Richtung zur Außenseite des Zylinders (2a) hin ist,
wobei zum Abdecken des Öffnungsabschnitts (23a) ein Luftzustrompassagenteil (30a) angebracht ist, wobei das Luftzustrompassagenteil (30a) einen vorstehenden Abschnitt (33) aufweist, der in den Öffnungsabschnitt (23a) hineinragt und der eine Führungsfläche (34) hat, die eine Neigung in einem vorbestimmten Winkel (α) aufweist und die am vorderen Endabschnitt des vorstehenden Abschnitts (33) und der Luftzustrompassage (31) ausgebildet ist,
wobei die Führungsfläche (34) in der horizontalen Spülstrompassage (22a) so mit einer Neigung in einem vorbestimmten Winkel (α) zu einer durch die Mittelachse der Zylinder (2a) -Draufsicht verlaufenden Linie geformt ist, dass sie in Richtung zu einer an einer der Auslassöffnung (10) gegenüberliegenden Seite befindlichen Innenfläche des Zylinders (2a) hin gerichtet ist, und
wobei die horizontale Spülstrompassage (22a) zu der an der der Auslassöffnung (10) gegenüberliegenden Seite befindlichen Innenfläche des Zylinders (2a) hin gerichtet ist.

## Revendications

1. Cylindre moulé pour un moteur à combustion fonctionnant selon le cycle à deux temps et à balayage stratifié comprenant :
- un piston (3),
- un cylindre (2, 2a) logeant ledit piston (3) pour qu'il soit susceptible de coulisser verticalement,
- un carter moteur (4) relié audit cylindre (2, 2a),
- un orifice d'échappement (10) et un orifice de balayage (14) chacun étant prévu dans une paroi latérale dudit cylindre (2, 2a),
- un passage vertical (21) d'écoulement de balayage prévu dans la paroi latérale moulée dudit cylindre (2, 2a), une partie d'extrémité inférieure dudit passage vertical (21) d'écoulement de balayage étant reliée à une chambre de vilebrequin (7) ;
- un passage horizontal (22, 22a) d'écoulement de balayage pour une connexion entre la partie d'extrémité supérieure dudit passage vertical (21) d'écoulement de balayage et ledit orifice de balayage (14),
- un passage d'écoulement d'alimentation en air (31) fournissant de l'air à travers un clapet anti-retour (32) vers un passage d'écoulement de balayage (20) ayant ledit passage vertical (21) d'écoulement de balayage et ledit passage horizontal (22, 22a) d'écoulement de balayage, et
- un passage (13) d'écoulement d'alimentation en mélange fournissant du mélange, à partir de moyens d'alimentation en carburant (12) à ladite chambre de vilebrequin (7),
dans lequel une partie d'ouverture (23, 23a) est prévue dans la paroi latérale dudit cylindre (2, 2a) qui est le prolongement dudit passage horizontal (22, 22a) d'écoulement de balayage vers l'extérieur dudit cylindre (2, 2a), et
ledit orifice de balayage (14) et ledit passage horizontal (22) d'écoulement de balayage sont formés à travers un trou traversant (26) en biseau qui pénètre dans ladite partie d'ouverture (23) et dans la face interne dudit cylindre (2), par l'intermédiaire de ladite partie d'ouverture (23).

2. Cylindre moulé selon la revendication 1, dans lequel :
- ledit trou traversant en biseau (26) est alésé avec une inclination d'un angle prédéterminé (α) par rapport à une ligne passant par l'axe central dudit cylindre (2) dans la vue en plan,
et dans lequel :
- ladite partie d'ouverture (23) est prévue avec une face (28) qui est perpendiculaire à l'axe dudit trou traversant en biseau (26) et qui est munie d'un dégagement excentré (25) pour éviter d'interférer avec des outils au cours de l'usinage sur un siège de montage (24) d'un élément de passage (30) d'écoulement d'alimentation en air disposé sur la bordure extérieure du cylindre.

3. Cylindre moulé pour un moteur à combustion fonctionnant selon le cycle à deux temps et à balayage stratifié comprenant:
- un piston (3),
- un cylindre (2a) logeant ledit piston (3) pour qu'il soit susceptible de coulisser verticalement,
- un carter moteur (4) relié audit cylindre (2a),
- un orifice d'échappement (10) et un orifice de balayage (14) chacun étant prévu dans une paroi latérale dudit cylindre (2a),
- un passage vertical (21) d'écoulement de balayage prévu dans la paroi latérale moulée dudit cylindre (2a), une partie d'extrémité inférieure dudit passage vertical (21) d'écoulement de balayage étant reliée à une chambre de vilebrequin (7) ;
- un passage horizontal (22a) d'écoulement de balayage pour une connexion entre la partie d'extrémité supérieure dudit passage vertical (21) d'écoulement de balayage et ledit orifice de balayage (14),
- un passage d'écoulement d'alimentation en air (31) fournissant de l'air à travers un clapet anti-retour (32) vers un passage d'écoulement de balayage (20) ayant ledit passage vertical (21) d'écoulement de balayage et ledit passage horizontal (22a) d'écoulement de balayage, et
- un passage (13) d'écoulement d'alimentation en mélange fournissant du mélange, à partir de moyens d'alimentation en carburant (12) à ladite chambre de vilebrequin (7),
dans lequel
- une partie d'ouverture (23a) est prévue dans la paroi latérale dudit cylindre (2a) qui est le prolongement dudit passage horizontal (22a) d'écoulement de balayage vers l'extérieur dudit cylindre (2a),
- un élément de passage (30a) d'écoulement d'alimentation en air est fixé afin de recouvrir ladite partie d'ouverture (23a), ledit élément de passage (30a) d'écoulement d'alimentation en air ayant une partie en saillie (33) qui fait saillie dans ladite partie d'ouverture (23a), et présent une face de guidage (34) ayant une inclination d'un angle prédéterminé (α) prévue à une partie d'extrémité avant de la partie en saillie (33) et ledit passage d'écoulement d'alimentation en air (31),
- ladite face de guidage (34) dans le passage horizontal (22a) d'écoulement de balayage est formée avec une inclination d'un angle prédéterminé (α) par rapport à une ligne passant par l'axe central dudit cylindre (2a) dans la vue en plan, afin d'être dirigée vers la surface intérieure dudit cylindre (2a) d'un côté opposé de l'orifice d'échappement (10), et
- ledit passage horizontal (22a) d'écoulement de balayage est dirigé vers la surface intérieure dudit cylindre (2a) d'un côté opposé de l'orifice d'échappement (10).
